(19) Europäisches Patentamt
European Patent Office
Office européen des brevets

(11) **EP 1 940 119 B1**

(12) **FASCICULE DE BREVET EUROPEEN**

(45) Date de publication et mention
de la délivrance du brevet:
**18.03.2009   Bulletin 2009/12**

(51) Int Cl.:
***H04L 29/06*** *(2006.01)*

(21) Numéro de dépôt: **07301743.6**

(22) Date de dépôt: **26.12.2007**

(54) **Procédé d'adaptation d'un mode de compression de données numériques**

Adaptationsverfahren eines Kompressionsmodus von digitalen Daten

Method for adapting a digital data compression mode

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **26.12.2006   FR 0655954**

(43) Date de publication de la demande:
**02.07.2008   Bulletin 2008/27**

(73) Titulaire: **Societé Française du Radiotéléphone
75008 Paris (FR)**

(72) Inventeurs:
• **Bonnin, Jean-Marie
35150, CORPS NUDS (FR)**
• **Ben Rayana, Rayène
35510, CESSON-SEVIGNE (FR)**
• **Ha, Thanh-Luu
77600, BUSSY SAINT GEORGES (FR)**

(74) Mandataire: **Schmit, Christian Norbert Marie
SCHMIT CHRETIEN
8, place du Ponceau
95000 Cergy (FR)**

(56) Documents cités:
**EP-A- 1 603 339          WO-A-02/10929
US-B1- 6 289 118          US-B1- 6 567 559**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention a pour objet un procédé d'adaptation d'un mode de compression de données numériques.

Le domaine de l'invention est celui de la compression de données numériques lors de la transmission de ces données, et en particulier de la transmission de ces données dans un environnement réseau de type réseau sans fil. Dans un tel réseau les conditions d'établissement du lien physique évoluent fortement dans le temps. Par réseau sans fil on entend ici un réseau auquel un terminal mobile est apte à se connecter.

Un terminal mobile est soit un terminal de téléphonie mobile, soit un assistant personnel, soit même un ordinateur portable. D'une manière générale, un terminal mobile est donc tout dispositif transportable sans assistance par un être humain et doté de capacités de connexion sans fil. Parmi les types de connexions sans fil, on pense aussi bien aux réseaux de téléphonie mobile de générations 2, 2.5, 3 ou à venir, qu'aux réseaux sans fil de type Wifi, Wimax ou BlueTooth.

Dans l'état de la technique, avec l'expansion des réseaux cellulaires, des réseaux locaux sans fil et les travaux autour de la mobilité dans ces réseaux, les méthodes de compression actuelles sont devenues obsolètes. En effet, ces méthodes assument une certaine stabilité des conditions réseau et ne sont généralement adaptées qu'à un seul type de flux. Aujourd'hui, le support de la mobilité tend à se généraliser et, dans un contexte de mobilité, les conditions réseaux peuvent difficilement être stabilisées. De plus, les terminaux mobiles sont de plus en plus polyvalents. Ils sont utilisés en tant que téléphones, visiophones, clients de messageries instantanées, lecteurs multimédia, etc . Ainsi, les liens sans fil sont utilisés pour véhiculer des flux hétérogènes.

Dans l'état de la technique, l'établissement d'un lien réseau, aussi appelé connexion réseau, se fait en utilisant le protocole PPP (Point to Point Protocol, protocole point à point) qui permet à un terminal mobile de négocier avec le réseau auquel il est connecté des paramètres de communication lui permettant d'être vu et de dialoguer sur un réseau IP, c'est-à-dire par exemple un réseau local (LAN), ou le réseau Internet. Le protocole PPP comporte en particulier un "sous-protocole" CCP (Compression Control Protocol, pour protocole de contrôle de la compression) pour la négociation de paramètres de compression pour le lien à établir. Le protocole CCP permet de négocier un mode de compression qui sera utilisé pour toutes les données qui circuleront via le lien réseau à établir. Cette négociation se fait donc sans connaissance de la nature des données qui vont circuler, et surtout pour toutes les données qui vont circuler. Même si un changement de mode de compression est possible sans réinitialiser complètement le lien réseau, ce changement implique qu'aucune donnée ne circule pendant la re-négociation, et que tous les paquets de données non traités depuis la réception d'une demande de re-négociation sont considérés comme n'ayant jamais existé. Cette re-négociation concerne le lien en entier. C'est-à-dire que cette re-négociation, comme la négociation initiale impacte toutes les données circulant via le lien.

Dans l'état de la technique, on connaît plusieurs algorithmes de compression. Chacun ayant ses forces et ses faiblesses. On a choisi d'en décrire ici trois parmi les plus usités pour illustrer le problème posé, en corrélation avec PPP.

L'algorithme "deflate" est un algorithme de compression sans perte qui combine l'algorithme Lempel-Ziv et le codage de Huffman. Il a été défini à l'origine par Phil Katz pour la version 2 de son outil de compression PKZip, puis a été standardisé par la RFC 1951.

L'algorithme "detlate" a été largement utilisé dans les réseaux et la compression de fichier avant même sa standardisation en 1996. L'algorithme demande un temps de calcul assez important mais donne, en contrepartie, un des meilleurs taux de compression actuels.

L'efficacité de l'algorithme "deflate" est comparable aux meilleures méthodes de compression actuelles dans un environnement fiable. Si l'environnement n'est pas fiable, l'algorithme "deflate" utilise les mécanismes de recouvrement de CCP, le protocole de gestion de la compression de PPP, pour se rétablir après une erreur. Ces mécanismes appelés "Reset-Request" et "Reset-Ack" induisent des pertes supplémentaires de paquets puisqu'ils réinitialisent complètement la session à chaque fois qu'un paquet est perdu sur le lien. Cela entraîne des délais importants dans la transmission.

L'algorithme "predictor", spécifié par le RFC 1978, est une méthode de compression très rapide quoique moins performante que ses rivales: le taux de compression obtenu en utilisant l'algorithme "predictor" n'est pas aussi important que celui de l'algorithme "deflate", par exemple, mais il est plus robuste et plus rapide que ce dernier.

Pour résumer son fonctionnement, le compresseur parcourt la suite d'octets à compresser en essayant de prédire les prochaines séquences, s'il réussit à le faire, il estime que le décompresseur peut le faire aussi. Sinon, il envoie les données brutes.

La spécificité de Predictor réside dans l'absence de gestion d'un historique entre les paquets. Chaque paquet est compressé et décompressé indépendamment des autres. Ceci peut être utile dans les environnements peu fiables puisque la perte d'un paquet n'affecte pas les autres.

Les algorithmes "deflate" et "predictor" sont des algorithmes de compression de données travaillant sur des données brutes et en particulier sur la charge (payload) d'un paquet de données. Ils présentent un certain nombre d'inconvénients supplémentaires si on leur soumet des données déjà compressées. Ces inconvénients sont tout d'abord une augmentation de la taille des données à transmettre, et une augmentation inutile du délai de transmission due aux temps de compression/décompression.

Parmi les algorithmes de compression, il existe aussi les algorithmes de compression d'en-têtes, parmi ceux-ci on retient surtout RoHC.

L'algorithme "RoHC", RObust Header Compression (pour compression robuste d'en-tête), a été standardisé par la RFC 3095 en 2001 avec un objectif principal : être assez robuste pour être utilisé dans les réseaux cellulaires.

L'algorithme "RoHC" est modulaire et extensible; il permet l'ajout ultérieur de profils. Un profil est l'ensemble des mécanismes servant à compresser une suite d'en-têtes particulière (e.g. IP/TCP ou IP/UDP/RTP). L'algorithme "RoHC" est donc capable de compresser les en-têtes de niveau transport.

L'algorithme "RoHC" a aussi une classification très détaillée des champs contenus dans les en-têtes en fonction de leur comportement dans le temps. Il classifie même certains champs comme CHANGING (changeant) pour établir leurs comportements de façon dynamique.

Le principal reproche fait à RoHC est sa complexité. La multitude de techniques qui y sont utilisées en fonction de la classification des champs font de lui un outil assez lourd et difficile à mettre en oeuvre sur les terminaux mobiles ayant des capacités limitées. Cette limitation devrait cependant être très vite levée avec l'évolution physique des terminaux.

Le principal problème posé par ce type d'algorithme de compression d'en-têtes est qu'il ne compresse que les en-têtes ce qui est parfois totalement inadapté. Pourtant, dans l'état de la technique, et pour un lien donné, le terminal ne met en oeuvre qu'un et un seul algorithme de compression quelques soient les flux utilisant ce lien.

Les exemples d'application suivant illustrent encore mieux les problèmes. Considérons la structure d'un paquet de données, ou trame, pour une application de voix sur Internet, aussi appelée application VoIP.

Cette trame a la structure suivante:

| En-têtes | | | Données |
|----------|-----|-----|---------|
| IPV6 | UDP | RTP | |
| 40 | 20 | 20 | 20 |

Une telle trame a donc un en-tête de 80 octets pour une charge de données de 20 octets. Dans ce cas la compression d'en-têtes est la compression la plus appropriée.

Considérons maintenant une trame pour une application de transfert de fichier.

Cette trame a la structure suivante :

| En-têtes | | Données |
|----------|-----|---------|
| IPV6 | FTP | |
| 40 | 20 | 1400 |

Une telle trame a donc un en-tête de 60 octets pour une charge de données de 1400 octets. Dans ce cas, la compression la plus appropriée semble être la compression de charge à la condition que le contenu transféré ne soit pas déjà compressé.

Pourtant ces deux flux peuvent coexister sur un seul et même lien, et donc être compressés par la même méthode. Il y a donc une vraie perte d'efficacité.

Dans l'invention, on résout ces problèmes en analysant les flux de données d'un lien pour extraire pour chaque flux des caractéristiques permettant de sélectionner un algorithme de compression adapté à ces caractéristiques. La sélection de l'algorithme de compression est aussi dépendante d'une analyse des conditions de transmissions sur le lien physique. Cette solution est particulièrement bien adaptée pour être mise en oeuvre au niveau de la couche 2 du modèle OSI défini par la norme dont la référence est ISO 7498 et qui est globalement intitulée «Modèle de référence de base pour l'interconnexion de systèmes ouverts (OSI)». Dans ce cas, un flux de données est caractérisé par un contexte réseau comportant au moins, dans le cas de communication IP, une adresse IP et un numéro de port. D'une manière exhaustive une flux peut aussi être identifié par deux adresses IP (source et destination), deux numéros de port (source et destination) et un numéro de protocole. On parle généralement du quintuplet qui permet d'identifier un flux.

On choisit ici le niveau 2 car il offre entre une machine et son router d'accès IP un moyen de transmission qui ne s'appuie pas sur le contenu de l'en-tête IP pour aller de l'un à l'autre. L'invention va donc aussi fonctionner lorsque qu'un tunnel de « niveau 2 » est un tunnel IP (par exemple entre un client VPN et son serveur).

L'invention a donc pour objet un mécanisme d'adaptation du mode de compression des données numériques lors de la transmission des flux. Il est caractérisé en ce qu'il comporte les étapes suivantes mise en oeuvre par un terminal de communication apte à mettre en oeuvre au moins deux algorithmes de compression:

- classification des données à transmettre en N flux distincts,
- analyse de chaque flux pour en déterminer des premières grandeurs caractéristiques,
- analyse des conditions de transmission sur le lien physique pour en déterminer des deuxièmes grandeurs caractéristiques,
- combinaison, pour chaque algorithme de compression que le terminal est apte à mettre en oeuvre, des premières et deuxièmes grandeurs caractéristiques via une fonction de performance pour calculer une note de performance,
- sélection, pour chaque flux identifié, de l'algorithme de compression ayant la meilleure note de performance.

Dans une variante le procédé selon l'invention est aussi caractérisé en ce que les premières grandeurs appartiennent à l'ensemble formé d'au moins les éléments suivants:

- taille du paquet de données,
- délai interpaquet et
- redondance des données dans le paquet.

Dans une variante, le procédé selon l'invention est aussi caractérisé en ce que les deuxièmes grandeurs appartiennent à l'ensemble formé d'au moins les éléments suivants:

- taux de perte de paquets et
- délai de transmission d'un paquet.

Dans une variante le procédé selon l'invention est aussi caractérisé en ce qu'une note de performance est une somme pondérée d'au moins deux troisièmes grandeurs obtenues à partir des premières et deuxièmes grandeurs.

Dans une variante le procédé selon l'invention est aussi caractérisé en ce que les troisièmes grandeurs appartiennent à l'ensemble formé d'au moins les éléments suivants:

- taux de compression,
- délai supplémentaire, et
- pertes supplémentaire.

Dans une variante le procédé selon l'invention est aussi caractérisé en ce qu'une note de performance est obtenue par une confrontation d'un vecteur caractéristique constitué des premières et deuxièmes grandeurs à une matrice de performance comportant au moins autant de colonne que le vecteur caractéristique comporte d'élément, plus au moins une colonne supplémentaire correspondant à la note de performance ou à au moins une grandeur utilisée pour produire la note de performance.

Dans une variante le procédé selon l'invention est aussi caractérisé en ce que la note de performance est une fonction du paramètre de performance issu de la colonne supplémentaire.

Dans une variante le procédé selon l'invention est aussi caractérisé en ce que la confrontation entre le vecteur caractéristique et la matrice de performance est réalisée par une élimination successive des lignes de la matrice de performance, chaque élimination successive prenant en compte un élément du vecteur et la colonne correspondante de la matrice de performance, seules les lignes de la matrice de performance dont les valeurs de la colonne sont quasi égales à l'élément du vecteur de performance conservé, la dernière ligne conservée étant celle comportant la note de performance ou à au moins une grandeur utilisée pour produire la note de performance.

Dans une variante le procédé selon l'invention est aussi caractérisé en ce que la confrontation entre le vecteur caractéristique et la matrice de performance est réalisé via une interpolation.

Les documents WO02/10929 et US 6,567,559 décrivent des procédés de sélection des méthodes de compression basée sur la détermination du type d'un fichier à transmettre parmi différents types (niveau OSI 7).

L'invention sera mieux comprise à la lecture de la description qui suit et à l'examen des figures qui l'accompagnent. Celles-ci sont présentées à titre indicatif et nullement limitatif de l'invention. Les figures montrent:

- figure 1: une illustration d'un terminal mettant en oeuvre le procédé selon l'invention,
- figure 2: une illustration d'étapes du procédé selon l'invention,
- figure 3: une illustration d'une table d'association de paramètres de performance à des mesures.

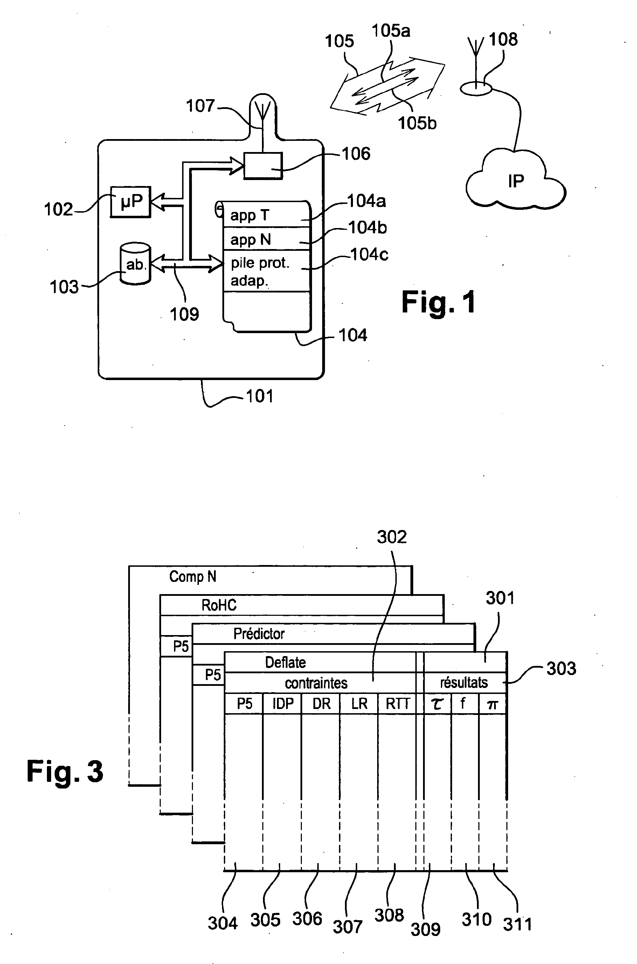

La figure 1 montre un terminal 101 mobile. Dans la description, le terminal 101 est un téléphone mobile d'un utilisateur abonné à un opérateur de téléphonie mobile. Dans la pratique le terminal 101 peut être tout type de dispositif électronique communicant et transportable. Par transportable on entend ici un dispositif qui peut être transporté par un être humain sans assistance. De tels terminaux sont, par exemple, les téléphones mobiles, les assistants personnels et les ordinateurs portables. La liste n'est pas exhaustive.

Dans la pratique l'invention peut aussi être mise en oeuvre entre deux équipement réseau, par exemple des routeurs, connectés via une liaison filaire.

Le téléphone 101 communique selon l'une des normes de téléphonie mobile, de préférence une norme de téléphonie mobile supportant un mode de communication de type données (mode data) selon un protocole du type IP (Internet Protocol pour protocole Internet). Dans la pratique ces normes sont celles supérieures ou égales à la deuxième génération de la téléphonie mobile.

La figure 1 montre que le téléphone 101 comporte un microprocesseur 102, une mémoire 103 de tables d'associations ou abaques, une mémoire 104 de programmes et des circuits 106 de communication selon une norme de téléphonie mobile. Les éléments 102 à 104 et 106 sont interconnectés par un bus 109.

Dans cette description lorsque l'on prête une action à un dispositif, ou à une application, cette action est en fait réalisée par un microprocesseur du dispositif commandé par des codes instruction enregistrés dans une mémoire de programme du dispositif et correspondant à l'action entreprise ou à l'application.

Dans l'exemple utilisé pour décrire l'invention, la mémoire 104 comporte au moins des codes 104a instruction correspondant à une application 1, par exemple une application de type navigateur Internet, et des codes instruction 104b correspondant à une application de voix sur IP (Internet Protocol pour Protocole Internet). La mémoire 104c comporte aussi une zone 104c comportant des codes instruction correspondant à la mise en oeuvre des protocoles de communication utilisés par les applications précédemment citées et d'autres applications non citées. La mise en oeuvre de ces protocoles est adaptée selon l'invention.

La mémoire 103 comporte des tables utilisées par le procédé selon l'invention pour associer des paramètres de performance à des mesures réalisées par le téléphone 101.

Dans l'invention il existe une de ces tables par méthode de compression que peut mettre en oeuvre le téléphone 101. On note aussi ici que le fait d'utiliser des tables pour associer des paramètres à des mesures n'est qu'un mode de réalisation de l'invention. Il est aussi possible d'utiliser une formule ou des formules, ou encore de mélanger l'utilisation de tables et de formules.

La figure 3 illustre un exemple de tables d'associations. Dans l'exemple de la figure 3 on illustre le fait que l'on parvient à extraire trois paramètres de performance à partir de cinq mesures et de la désignation d'un algorithme de compression. La désignation d'un algorithme de compression équivaut à la désignation d'une table. Dans la pratique les mesures sont aussi appelées des contraintes. Ces mesures portent à la fois sur la nature du flux considéré, et sur l'environnement réseau du terminal 101. Ces mesures sont regroupées dans un vecteur de mesures.

La figure 3 montre que la mémoire 103 est structurée en tables, chaque table correspondant à un algorithme de compression. La figure 3 montre trois tables chacune correspondant à un algorithme de compression qui sont pour l'exemple : "Deflate", "Predictor" et "RoHC", cette liste d'algorithmes n'étant pas exhaustive. Pour l'exemple on ne décrit la structure que d'une table, toutes les tables de la mémoire 103 ayant des structures identiques. Il est clair ici que chaque table comporte par contre des données propres à l'algorithme de compression qu'elle modélise.

La figure 3 montre donc une table 301 correspondant à l'algorithme "Deflate". La table 301 comporte deux colonnes principales, une colonne 302 de contraintes et une colonne 303 de résultats. Dans l'invention, la connaissance des contraintes (mesures) permet, via une table de la mémoire 103, de déterminer des résultats (paramètres de performance).

La colonne 302 de contraintes est elle-même subdivisée en cinq colonnes, ces colonnes étant désignées comme suit:

- colonne 304, PS: taille moyenne d'une charge d'un paquet (trame) de données,
- colonne 305, IPD: délai moyen entre deux paquets successifs,
- colonne 306, DR: redondance moyenne des données dans le protocole de transmission,
- colonne 307, LR: taux moyen de perte de paquets, et
- colonne 308, RTT: délai moyen de transmission d'un paquet.

En lieu et place du paramètre RTT (Real Transmission Time pour temps réel de transmission) on pourrait aussi utiliser le paramètre OWD (One Way Delay, pour temps de l'allé).

Ces contraintes définissent un contexte qui est mesuré en permanence par un dispositif mettant en oeuvre le procédé selon l'invention. Dans l'exemple il s'agit du dispositif 101.

Dans la pratique, grâce à l'invention, la taille des charges des paquets permet de départager les méthodes de compression de contenu et celles qui ne compressent que les en-têtes, étant donné que ces dernières sont pénalisées par les paquets volumineux.

Le délai entre deux paquets est une mesure destinée à pénaliser les méthodes avec un rafraîchissement de contexte périodique quand le délai entre deux paquets est important. Ceci est le cas en particulier de la méthode de compression "RoHC" en mode unidirectionnel. En effet dans ce mode de compression, le dispositif envoie à intervalles réguliers, des paquets non compressés afin de régénérer son contexte. Cette mesure permet aussi de prendre en compte le temps de traitement dû à la production d'un paquet. Cette mesure permet encore de prendre en compte les échanges de données de signalisation utiles à la mise en oeuvre de l'algorithme de compression.

La redondance moyenne des données permet de différencier les flux dont le contenu est d'ores et déjà compressé et ceux qui contiennent des informations redondantes pouvant être aisément compressées. Ce paramètre permet d'avantager les méthodes de compression d'en-têtes dans le cas d'un flux déjà compressé dans la mesure où celles-ci ne tentent pas de recompresser tout le paquet mais seulement les en-têtes et obtiennent ainsi de meilleurs résultats.

Ces trois premiers paramètres décrivent des caractéristiques propres au mode de compression. Les deux autres caractéristiques s'attachent à décrire l'environnement de communication du dispositif mettant en oeuvre le procédé selon l'invention.

Le taux de perte est mesuré par le nombre de paquets qu'il faut réémettre à cause d'une mauvaise transmission.

Le délai moyen de transmission d'un paquet est mesuré, par exemple, par la mesure du temps entre l'émission d'un paquet de donnée et la réception d'un message d'acquittement de ce paquet. Ce délai peut aussi être mesuré via un protocole spécifique mis en oeuvre entre l'émetteur et le récepteur pour mesurer ce délai. Ce protocole peut être un simple échange de données. Ce protocole peut aussi inclure la mise en oeuvre d'une horloge sur laquelle l'émetteur et le récepteur se synchronisent.

La colonne 303 est elle aussi subdivisée en colonnes décrivant des résultats ou paramètres de performance. Ces colonnes sont désignées comme suit:

- colonne 309, T, taux de compression,

- colonne 310, δ, délai supplémentaire ou temps de traitement,
- colonne 311, TT, taux de perte supplémentaire induit par la méthode de compression.

Le taux de compression T est le paramètre de performance le plus important puisqu'il permet d'évaluer l'efficacité de la compression.

Le délai supplémentaire δ est une mesure du temps nécessaire pour l'opération de compression/décompression. Il est important dans la mesure où certaines méthodes, plus rapides que d'autres, sont à privilégier pour des flux ayant des contraintes temps réel.

Le taux de pertes supplémentaires TT permet de privilégier les méthodes de compression dites 'robustes', c'est-à-dire les méthodes qui résistent mieux à des pertes de paquets et n'induisent pas un délai important ou un grand nombre de pertes lorsqu'un paquet est perdu. ROHC est par exemple conçu pour résister aux pertes.

Dans la pratique d'autres paramètres de performance existent qui pourraient être ajouter à la colonne 303. Ces paramètres sont, par exemple, la résistance au déséquencement ou le délai d'initialisation. Cependant les trois paramètres de performance cités permettent une mise en oeuvre de l'invention avec de bons résultats. Cela ne méjuge pas d'une mise en oeuvre de l'invention avec un plus grand nombre de paramètres de performance.

La figure 1 montre aussi que le téléphone 101 comporte des circuits 106 interface entre le bus 109 et une antenne 107. C'est via ces circuits 106 et cette antenne 107 que le téléphone 101 trafique sur un réseau d'un opérateur de téléphonie mobile. Le téléphone 101 accède à ce réseau via une station 108 de base à laquelle il se connecte et avec laquelle il échange de données selon au moins un protocole, et en particulier selon un protocole basé sur le protocole IP. Ces échanges de données sont aussi appelé le trafic 105. Comme précédemment précisé l'invention s'applique aussi à des communications filaires. Dans ce cas le trafic comporte tous les échanges de données, indépendamment du medium les supportant.

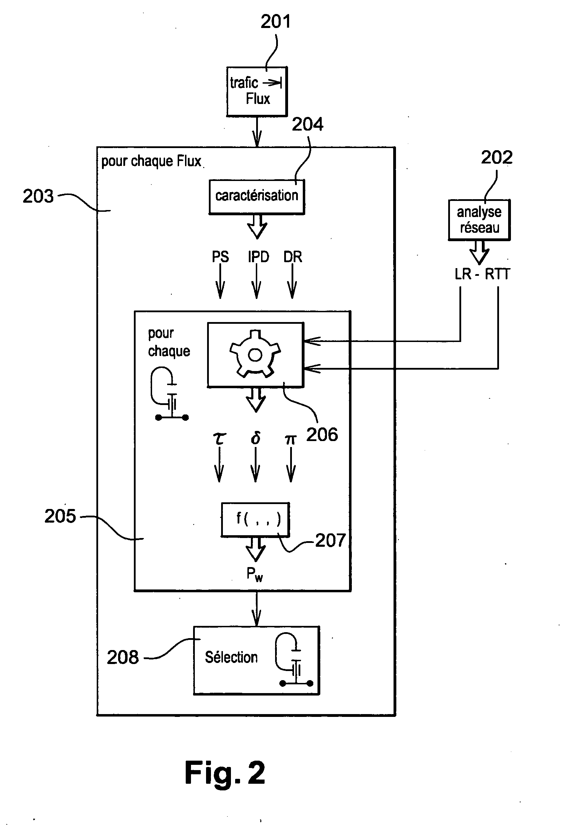

La figure 2 montre des étapes du procédé selon l'invention. La figure 2 montre une étape 201 de séparation/classification du trafic 105 en flux. Un flux est essentiellement décrit par deux correspondants, une application et un usage. En terme techniques cela se traduit, de manière exhaustive, pour le procéder selon l'invention, par un quintuplet (adresse IP source, adresse IP destination, port source, port destination, numéro de protocole).Dans une variante simplifié, une adresse IP source et un port source suffisent.

Ainsi l'application 1 génère des flux HTTP (Hyper Text Transfer Protocol, pour protocole de transfert hypertexte), mais aussi des flux FTP ou multimédia selon les capacités de l'application 1.

L'application 2 génère des flux selon des protocoles de voix sur IP.

Dans la pratique on parle d'un flux dès que l'on peut identifier un port de type IP. Un port de type IP est défini par une adresse IP et un numéro de port généralement compris entre 0 et 65535. Par extension dans ce texte un port est donc l'association d'une adresse IP, qu'elle corresponde à la version 4 ou à la version 6 du protocole IP, et d'un nombre entier.

Dans cette description on considère qu'à chaque port ouvert est associé un flux. Il y a donc autant de flux dans le trafic que de ports ouverts.

La figure 2 montre aussi une étape 202 dans laquelle le dispositif mettant en oeuvre le procédé selon l'invention mesure les paramètres LR et RTT. Ces mesures sont faîtes pour chaque flux à intervalles réguliers. Ces paramètres sont en fait accessibles au moins via par les fonctions de gestion des protocoles mis en oeuvre. En effet lorsqu'une trame transportant un paquet de données est émise, le destinataire de la trame émet une trame d'acquittement indiquant si le paquet de données a été correctement reçu ou non. La mesure du délai entre l'émission d'une trame et la réception de la trame d'acquittement correspondante permet donc de mesurer une grandeur proportionnelle au délai moyen de transmission d'un paquet. En fait cela permet de mesurer le temps mis par un message pour faire un aller retour entre l'émetteur et le récepteur. On peut donc facilement estimer le paramètre RTT).

Le fait de recevoir un message d'acquittement indiquant une erreur dans la transmission du paquet, ou de ne pas recevoir de trame d'acquittement pour un paquet, permet de classer la trame correspondante dans la catégorie des trames perdues. Il est donc aussi aisé de mesurer le paramètre LR. Il suffit de compter les messages d'acquittement négatifs ou non reçus et de rapporter le décompte aux nombres de trames émises. Dans une variante on utilise les fonctionnalité réseau du niveau 2 du modèle OSI pour accéder à cette information.

La figure 2 montre aussi une étape 203 effectuée pour chaque flux détecté à l'étape 201. L'étape 203 est une étape d'élection de l'algorithme de compression le plus adapté au flux considéré.

L'étape 203 comporte une étape 204 préliminaire de caractérisation du flux. Dans l'étape 204 le dispositif mettant en oeuvre le procédé selon l'invention détermine les paramètres PS, IPD et DR du flux considéré.

Le paramètre PS, qui est la taille moyenne d'un paquet de données, est mesurable directement pour peu qu'un paquet de données soit disponible. Hors il faut qu'un tel paquet soit disponible pour être émis, donc le dispositif a accès directement à ces paquet. Pour en déterminer la taille il suffit alors d'en compter les octets.

Le paramètre IPD, qui est le délai entre deux émissions successives de paquets dans le flux considéré. Il est donc aisé à mesurer, il suffit, par exemple, d'utiliser un compteur incrémenté par une horloge et remis à zéro à chaque émission de paquet. La lecture du compteur avant la remise à zéro permet d'accéder au paramètre IPD.

Le paramètre DR, qui est le taux de redondance des données, est mesuré, par exemple, en appliquant un algorithme de compression sans perte au paquet de données. Si le résultat de la compression donne un paquet ayant sensiblement la même taille que le paquet original alors il n'y a pas de redondance de données et il est relativement inutile d'utiliser une compression de données.

Une fois ces paramètres acquis, le dispositif 101 mettant en oeuvre le procédé selon l'invention passe à une étape 205 de notation des algorithmes de compression connus dudit dispositif relativement au flux analysé. Les paramètres acquis aux étapes 204 et 202 forment un vecteur qui peut être confronté aux tables de la mémoire 103.

L'étape 205 est mise en oeuvre pour chaque algorithme de compression connu. Le résultat des étapes 205 est une note par algorithme de chiffrement pour le flux analysé.

Considérons le traitement d'un algorithme, le traitement de tous les algorithmes étant identique. On décrit maintenant le traitement de l'algorithme correspondant à la table 301.

L'étape 205 comporte une étape 206 de production de paramètres de performance. Ces paramètres sont, on le rappelle, produits à partir des tables de la mémoire 103. On connaît plusieurs méthodes pour parvenir à ce résultat. Soit une régression linéaire ou polynomiale, soit une élimination successive de lignes. Le but étant d'élire dans la table traitée, la ligne la plus proche des contraintes produites aux étapes 204 et 202.

Par exemple, pour l'élimination de lignes successives, le dispositif mettant en oeuvre le procédé selon l'invention considère successivement chacune des contraintes déterminées aux étapes 202 et 204, numérotées pour la description C1 à C5. On rappelle que chaque contrainte correspond à une colonne de la colonne 302. Dans notre exemple, cela signifie que ledit dispositif considère au maximum cinq fois la table 301.

La première fois, appelons la itération I1, il considère la table 301 relativement à la contrainte C1. Ledit dispositif ne retient alors dans la table 301 que les lignes dont les valeurs de la colonne correspondant à la contrainte C1 sont sensiblement égales à C1. Par exemple les lignes retenues sont celles dont les valeurs de la colonne correspondant à la contrainte C1 sont égales à (C1 +/- p*C1) ou p vaut 0.05. Dans la pratique p est compris dans l'intervalle [0, 0.1].

Pour l'itération In, n > 1, ledit dispositif considère les lignes retenues à l'itération n-1 relativement à la contrainte Cn. Parmi ces lignes retenues, le dispositif ne retient que celles dont les valeurs de la colonne correspondant à la contrainte Cn sont sensiblement égales à Cn.

Les itérations s'arrêtent soit lorsqu'il ne reste qu'une ligne à considérer, ligne qui est alors la ligne élue, soit lorsque les cinq contraintes ont été considérées. Dans ce dernier cas le dispositif élit une ligne parmi celles résultant de la cinquième itération. Par exemple le dispositif élit la première de ces lignes, ou une ligne au hasard parmi celles-ci. Dans une autre variante le dispositif retient toutes ces lignes en faisant la moyenne des paramètres de performance de ces lignes.

Si au cours d'une itération n aucune ligne n'était retenue, alors on considère que l'itération n-1 est la cinquième itération.

Le fait d'avoir déterminé une ligne élue permet d'accéder à des paramètres de performance de la colonne 303, ceux correspondant à la ligne élue.

Ces paramètres de performance, T, δ et TT précédemment décrits, sont ensuite traités dans une étape 207 pour produire une note de performance. Dans un exemple cette étape est une combinaison linéaire de ces paramètre pour déterminer la note Pn de l'algorithme de compression n, ici celui correspondant à la table 301. Par exemple on a:

$$Pn = a.\tau + b.\delta + c.\pi$$

Les coefficients a, b et c sont soit fixés pour tous les types de flux selon les préférences de l'utilisateur, soit fixés pour chaque type de flux toujours selon les préférences de l'utilisateur. Ici un type de flux est assimilé à un protocole. Ces paramètres de pondération a, b et c sont enregistrés dans une mémoire de configuration non représentée. Les valeurs de ces paramètres de pondération permettent de déterminer le poids relatif des paramètres de performance.

Dans une variante de l'invention la table 301 ne comporte qu'un paramètre de performance, dans ce cas ce paramètre de performance est la note de performance.

Dans d'autres variantes la table 301 comporte un nombre quelconque de paramètres de performances.

L'étape 205 est répété pour chaque table de la mémoire 103, c'est-à-dire pour chaque algorithme de compression que le dispositif mettant en oeuvre le procédé selon l'invention est apte à mettre en oeuvre.

A la fin des étapes 205, dans une étape 208, ledit dispositif est en connaissance de N notes Pn de performance ou N est le nombre de tables dans la mémoire 103. La meilleure note correspond à l'algorithme de compression qui doit être mis en oeuvre pour la compression du flux analysé à l'étape 203.

Cet algorithme est alors utilisé pour compresser les paquets suivant dans le flux considéré.

Le résultat de cette notation est transmis au destinataire des paquets afin que celui-ci puisse décompresser les paquets émis. On note que cela n'est pas utile s'il est possible de détecter le mode de compression utilisé via le format du paquet.

Dans une variante de l'invention, les dispositifs émetteur et récepteur commencent par déterminer l'intersection de leurs capacités de compression. Cette détermination se fait, par exemple, par l'émission par chaque dispositif vers l'autre d'une trame désignant ses capacités de compression. Le résultat de l'intersection est donc l'ensemble des méthodes de compression connues à la fois de l'émetteur et du récepteur. Ce sont ces méthodes qui seront analysées par le procédé selon l'invention.

Le procédé selon l'invention permet donc d'analyser dynamiquement les flux de données émis et reçus par un dispositif et de toujours utiliser le meilleur algorithme de compression possible, c'est-à-dire celui le plus adapté au flux et à l'environnement réseau du dispositif. Avec l'invention il est en effet possible de changer de méthode de compression au court de la vie d'un flux selon l'évolution des paramètres du flux et/ou des paramètres réseau.

## Revendications

1. Procédé d'adaptation d'un mode de compression de données numériques lors de leurs transmission **caractérisé en ce qu'**il comporte les étapes suivantes mise en oeuvre par un terminal de communication apte à mettre en oeuvre au moins deux algorithmes de compression:

   - classification (201) des données à transmettre en N flux distincts,
   - analyse (203, 204) de chaque flux pour en déterminer des premières grandeurs caractéristiques,
   - analyse (202) des conditions de transmission sur le lien physique pour en déterminer des deuxièmes grandeurs caractéristiques,
   - combinaison (205-207), pour chaque algorithme de compression que le terminal est apte à mettre en oeuvre, des premières et deuxièmes grandeurs caractéristiques via une fonction de performance pour calculer une note de performance,
   - sélection (208), pour chaque flux identifié, de l'algorithme de compression ayant la meilleur note de performance.

2. Procédé selon la revendication 1 **caractérisé en ce que** les premières grandeurs appartiennent à l'ensemble formé d'au moins les éléments suivants:

   - taille du paquet de données (304),
   - délai inter-paquet (305) et
   - redondance des données dans le paquet (306).

3. Procédé selon l'une des revendications 1 ou 2 **caractérisé en ce que** les deuxièmes grandeurs appartiennent à l'ensemble formé d'au moins les éléments suivants:

   - taux de perte de paquets (307) et
   - délai de transmission d'un paquet (308).

4. Procédé selon l'une des revendications 1 à 3 **caractérisé en ce qu'**une note de performance est une somme pondérée (207) d'au moins deux troisièmes grandeurs (309-311) obtenues à partir des premières et deuxièmes grandeurs.

5. Procédé selon la revendication 4 **caractérisé en ce que** les troisièmes grandeurs appartiennent à l'ensemble formé d'au moins les éléments suivants:

   - taux de compression (309),
   - délai supplémentaire (310), et
   - pertes supplémentaires (311).

6. Procédé selon l'une des revendications 1 à 5, **caractérisé en ce qu'**une note de performance est obtenue par une confrontation d'un vecteur caractéristique constitué des premières et deuxièmes grandeurs à une matrice de performance comportant au moins autant de colonne que le vecteur caractéristique comporte d'élément, plus au moins une colonne supplémentaire correspondant à la note de performance ou à au moins une grandeur utilisée pour produire la note de performance.

7. Procédé selon la revendication 6, **caractérisé en ce que** le note de performance est une fonction du paramètre de performance issu de la colonne supplémentaire.

8. Procédé selon l'une des revendications 6 ou 7, **caractérisé en ce que** la confrontation entre le vecteur caractéristique et la matrice de performance est réalisée par une élimination successive des lignes de la matrice de performance, chaque élimination successive prenant en compte un élément du vecteur et la colonne correspondante de la matrice de performance, seules les lignes de la matrice de performance dont les valeurs de la colonne sont quasi égales à l'élément du vecteur de performance étant conservées, la dernière ligne conservée étant celle comportant la note de performance ou à au moins une grandeur utilisée pour produire la note de performance.

9. Procédé selon l'une des revendications 6 ou 7, **caractérisé en ce que** la confrontation entre le vecteur caractéristique et la matrice de performance est réalisée via une interpolation.

## Claims

1. A method for adapting a compression mode for digital data during their transmission **characterised in**

**that** it includes the following steps implemented by a communication terminal capable of implementing at least two compression algorithms :

- classification (201) of data to be transmitted in distinct N flows,
- analysis (203, 204) of each flow to determine the first characteristic values,
- analysis (202) of transmission conditions over the physical link to determine the second characteristic values
- combination (205-207), for each compression algorithm that the terminal is able to implement, of first and second characteristic values via a performance function to calculate a performance score,
- selection (208), for each identified flow, of the compression algorithm with the best performance score.

2. A method according to claim 1 **characterised in that** the first values belong to the group formed of at least the following elements:

- size of packet data (304),
- inter-packet time (305) and
- data redundancy in the packet (306).

3. A method according to one of claims 1 or 2 **characterised in that** the second values belong to the group formed of at least the following elements :

- packet loss rate (307) and
- transmission time of a packet (308).

4. A method according to one of claims 1 to 3 **characterised in that** a performance score is a weighted sum (207) of at least two third values (309-311) obtained from the first and second values.

5. A method according to claim 4 **characterised in that** the third values belong to the group formed of at least the following elements :

- compression ratio (309),
- additional time (310), and
- additional losses (311)

6. A method according to one of claims 1 to 5, **characterised in that** a performance score is obtained through a comparison of a characteristic vector, constituted of first and second values, to a performance matrix having at least as many columns as the characteristic vector has elements, plus at least one additional column corresponding to the performance score or to at least one value used to produce the performance score.

7. A method according to claim 6, **characterised in that** the performance score is a function of the performance parameter produced by the additional column.

8. A method according to one of claims 6 or 7, **characterised in that** the comparison between the characteristic vector and the performance matrix is obtained by a successive elimination of the matrix performance lines, each successive elimination taking into account a vector element and the corresponding column of the performance matrix, retaining only the lines of the performance matrix whose column values are almost equal to the element of performance vector, the last retained line being the one containing the performance score or of at least one value used to produce the performance score.

9. A method according to one of claims 6 or 7, **characterised in that** the comparison between the characteristic vector and the performance matrix is obtained through an interpolation.

**Patentansprüche**

1. Verfahren zum Anpassen eines Komprimierungsmodus für digitale Daten bei deren Übertragung, **dadurch gekennzeichnet, dass** es aus den folgenden Schritten besteht, die von einem Kommunikationsterminal ausgeführt werden, der in der Lage ist, zumindest zwei Komprimierungsalgorithmen anzuwenden:

- Einstufung (201) der zu übertragenden Daten in N unterschiedliche Flüsse,
- Analyse (203, 204) eines jeden Flusses, um dessen erste kennzeichnenden Größen zu bestimmen,
- Analyse (202) der Übertragungsbedingungen auf dem physischen Link zur Bestimmung zweiter kennzeichnender Größen,
- Kombination (205-207) der ersten und zweiten kennzeichnenden Größen für jeden Komprimierungsalgorithmus, den der Terminal umzusetzen in der Lage ist, durch eine Leistungsfunktion zum Berechnen einer Leistungsnote,
- Auswahl (208) des Komprimierungsalgorithmus mit der besten Leistungsnote für jeden identifizierten Fluss.

2. Verfahren nach Anspruch 1, **dadurch gekennzeichnet, dass** die ersten Größen einer Einheit angehören, die zumindest von den folgenden Elementen gebildet wird :

- Größe des Datenpakets (304),
- Zeitspanne zwischen den Paketen (305) und

- Redundanz der Daten in den Paketen (306).

3. Verfahren nach einem der Ansprüche 1 oder 2, **dadurch gekennzeichnet, dass** die zweiten Größen einer Einheit angehören, die zumindest von den folgenden Elementen gebildet wird :

- Verlustrate der Pakete (307) und
- Zeitspanne für die Übertragung eines Pakets (308).

4. Verfahren nach einem der Ansprüche 1 bis 3, **dadurch gekennzeichnet, dass** eine Leistungsnote eine gewichtete Summe (207) von zumindest zwei dritten Größen (309-311) ist, die man aus den ersten und den zweiten Größen erhält.

5. Verfahren nach Anspruch 4, **dadurch gekennzeichnet, dass** die dritten Größen einer Einheit angehören, die zumindest von den folgenden Elementen gebildet wird:

- Komprimierungsrate (309),
- Zusätzliche Zeitspanne (310) und
- Zusatzverluste (311).

6. Verfahren nach einem der Ansprüche 1 bis 5, **dadurch gekennzeichnet, dass** man eine Leistungsnote durch eine Konfrontation eines kennzeichnenden Vektors, der aus den ersten und zweiten Größen gebildet wird, mit einer Leistungsmatrix erhält, deren Anzahl an Spalten zumindest der Anzahl an Elementen des kennzeichnenden Vektors entspricht, zuzüglich mindestens einer zusätzlichen Spalte, die der Leistungsnote oder zumindest einer Größe entspricht, die für die Erstellung der. Leistungsnote verwendet wird.

7. Verfahren nach Anspruch 6, **dadurch gekennzeichnet, dass** die Leistungsnote eine Funktion des Leistungsparameters ist, der aus der zusätzlichen Spalte hervorgeht.

8. Verfahren nach einem der Ansprüche 6 oder 7, **dadurch gekennzeichnet, dass** die Konfrontation zwischen dem kennzeichnenden Vektor und der Leistungsmatrix durch eine sukzessive Eliminierung der Zeilen der Leistungsmatrix erfolgt, wobei jede sukzessive Eliminierung ein Element des Vektors und die entsprechende Spalte der Leistungsmatrix erfasst, wobei nur die Zeilen der Leistungsmatrix, deren Spaltenwerte quasi dem Element des Leistungsvektors entsprechen, beibehalten werden, und die letzte beibehaltene Zeile jene ist, die die Leistungsnote enthält, oder jene mit zumindest einer Größe, die zur Erstellung der Leistungsnote verwendet wird.

9. Verfahren nach einem der Ansprüche 6 oder 7, **dadurch gekennzeichnet, dass** die Konfrontation zwischen dem kennzeichnenden Vektor und der Leistungsmatrix mittels einer Interpolation erfolgt.

105
105a
108

107

106

IP

102 — µP

104a — app T
104b — app N
104c — pile prot. adap.

103 — ab.

109

104

**Fig. 1**

101

302

301

Comp N

RoHC

P5 | Prédictor

P5 | Deflate

303 — résultats

contraintes

| P5 | IDP | DR | LR | RTT | $\tau$ | f | $\pi$ |
|-----|-----|-----|-----|-----|-----|-----|-----|
| | | | | | | | |

**Fig. 3**

304  305  306  307  308  309  310  311

**Fig. 2**

**EP 1 940 119 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0210929 A

- US 6567559 B